# EUROPÄISCHE PATENTSCHRIFT

(11) **EP 0 580 995 B1**
(45) Veröffentlichungstag und Bekanntmachung des Hinweises auf die Patenterteilung: **21.02.1996**
(21) Anmeldenummer: 93109097.1
(22) Anmeldetag: 07.06.1993
(51) Int. Cl.: B61F 3/12, B61F 5/44

(54) **Aus mindestens zwei Fahrzeugen bestehender spurgeführter Fahrzeugverband mit gesteuerten Einzelradsatzfahrwerken**
Track guided vehicle system consisting of at least two vehicles with stored running gears with single wheelsets
Système de véhicules guidés consistant d'au moins deux véhicules avec des trains de roulement commandés avec des trains de roues uniques

(30) Priorität: 24.07.1992 DE 9209966 U
(43) Veröffentlichungstag der Anmeldung: 02.02.1994
(73) Patentinhaber: Linke-Hofmann-Busch GmbH, D-38239 Salzgitter (DE)
(72) Erfinder: Rose, Rolf-Dieter, Dipl.-Ing., D-3300 Braunschweig (DE); Jassat, Raimund, D-3320 Salzgitter 1 (DE); Stradtmann, Hinnerk, Dipl.-Ing., D-3300 Braunschweig (DE)

(56) Entgegenhaltungen:
- EP-A- 0 007 225
- CH-A- 427 889
- DE-B- 1 082 615

## Beschreibung

Die Erfindung betrifft ein aus mindestens zwei Fahrzeugen bestehenden spurgeführten Fahrzeugverband mit gesteuerten Einzelradsatzfahrwerken gemäß dem Oberbegriff des Hauptanspruchs.

Ein derartiger Fahrzeugverband ist aus der EP 0 054 830 A1 bekannt, dessen Steuereinrichtung ebenso wie eine Vielzahl weiterer Radsatz- oder Fahrwerkssteuerungen in Abhängigkeit von der Stellung von Fahrzeuggliedern bei Bogenfahrt die Rollrichtung der Radsätze in die Richtung der Gleisachse einsteuern sollen. Einerseits wegen der kleinen Eingabe- und Steuerwinkel und andererseits um eine Streckung des Wellenlaufs der Radsätze zu erreichen, arbeiten alle bisher gebräuchlichen Steuerungen mit steifen Bauelementen und Gelenken. Diese steife Kopplung zwischen den steuernden und den gesteuerten Bauelementen hat den Nachteil, daß bei Bogenein- und Bogenausfahrt Fehlsteuerwinkel verursacht werden (Lit. Bergner: Reduzierung des Bogenverschleißes durch Zwangssteuerungen Stadtverkehr 1/88, S. 60 - 67). Die steife Kopplung erfordert außerdem eine sehr präzise Grundeinstellung, damit die Radsätze bei Lauf im geraden Gleis mittig (oder wenigstens mit möglichst geringem Schlupf) laufen. Außerdem übertragen die steifen Koppelelemente Stöße der Fahrwerke auf die Wagenkästen.

Weiter sind eine Vielzahl von selbstlenkenden Radsatzfahrwerken bekannt, die durch elastische oder mittels Pendel- oder Schaken schwerkraftabhängig rückstellende Anlenkung des mit konischen Laufflächen ausgestatteten Radsatzes die selbsttätig bogenrichtige Einstellung des Radsatzes ermöglichen (Megi- oder Gummirollfederradsatzführung und Vereinslenkachse). Wegen der zu übertragenden Brems- und Antriebskräfte muß die Anlenkung für die freie Einstellung nachteilig steif ausgeführt werden, oder es werden rahmenseitig feste Anschläge angeordnet, die beim Bremsen oder Antreiben bei beidseitiger Anlage der Radsatzlager keine bogenrichtige Einstellung zulassen.

Der Erfindung liegt die Aufgabe zugrunde, für einen Fahrzeugverband, bestehend aus mindestens zwei spurgeführten Fahrzeugen, eine Anlenkung für Einzelradsatzfahrwerke anzugeben, die bei allen Fahrzuständen eine möglichst genaue Ausrichtung der Einzelradsatzfahrwerke in Richtung der Gleisachse gewährleistet.

Diese Aufgabe wird durch den in Anspruch 1 gekennzeichneten Fahrzeugverband gelöst.

Zweckmäßige Weiterbildungen der Erfindung sind in den Ansprüchen 2 bis 6 angegeben.

Die erfindungsgemäße Kombination von Selbstlenkung und Zwangssteuerung gemäß Anspruch 1 eliminiert oder mindert die Nachteile der bisher gebräuchlichen selbstlenkenden Radsatzfahrwerke wie auch der im wesentlichen steifen Kopplung der Radsatz- oder Fahrwerkssteuerung.

Dadurch wird dem Radsatz die Möglichkeit gegeben, die beim Bogeneinlauf und Bogenauslauf auftretenden Fehlsteuerwinkel selbst auszugleichen. Außerdem werden bei Verwendung von elastischen Elementen zwischen Radsatz und Steuergestänge diese selbst und die steuernden Wagenkästen der Fahrzeuge vor Längsstößen der Radsätze bewahrt.

Gegenüber bisher bekannten Ausführungen von nur selbstlenkenden, aber nicht gesteuerten Fahrwerken bietet die Kombination von Steuerung und Selbstlenkung den Vorteil, daß bei Bogenfahrt durch die Voreinsteuerung die Selbstlenkbewegungen klein sind und durch Antriebs- und Bremskräfte nicht oder nur unwesentlich beeinflußt werden.

Durch die Ausbildung und Anordnung der Selbstlenkelastizität gemäß Anspruch 2 oder Anspruch 3 wird die Selbstlenkung der Einzelradsatzfahrwerke durch Antriebs- und /oder Bremskräfte praktisch nicht beeinträchtigt.

Mehrere Ausführungsbeispiele der Erfindung sind nachstehend unter Bezugnahme auf die Zeichnungen näher erläutert.

Es zeigt
- Fig. 1: einen Fahrzeugverband in Seitenansicht mit zwei Fahrzeugen und drei Einzelfahrwerken;
- Fig. 2: einen weiteren Fahrzeugverband in Seitenansicht mit zwei Fahrzeugen und drei Einzelfahrwerken;
- Fig. 3: einen Fahrzeugverband in Seitenansicht mit zwei Fahrzeugen und vier Einzelfahrwerken;
- Fig. 4: einen Fahrzeugverband in Seitenansicht mit drei Fahrzeugen und vier Einzelfahrwerken;
- Fig. 5: einen weiteren Fahrzeugverband in Seitenansicht mit drei Fahrzeugen und vier Einzelfahrwerken;
- Fig. 6: einen Fahrzeugverband in Seitenansicht und drei Fahrzeugen und sechs Einzelfahrwerken;
- Fig. 7: einen Fahrzeugverband in Draufsicht mit zwei Fahrzeugen und drei Einzelfahrwerken im Gleisbogen mit Angabe des Bezugssystems für verschiedene Wendewinkel und Steuerwinkel;
- Fig. 8: eine Ausbildung einer Fahrzeugverbindung mittels Gelenk;
- Fig. 9: eine Ausbildung einer Fahrzeugverbindung mittels Aufsatteleinrichtung;
- Fig. 10: eine Ausbildung einer Fahrzeugverbindung mittels Kuppelstange;
- Fig. 11: eine Ausbildung für den Steuerwinkelabgriff über den Stirnwandwinkel;
- Fig. 12: eine weitere Ausbildung für den Steuerwinkelabgriff über den Steuerwinkel;
- Fig. 13: eine weitere Ausbildung für den Steuerwinkelabgriff über den Steuerwinkel;
- Fig. 14: eine weitere Ausbildung für denSteuerwinkelabgriff über den Steuerwinkel;
- Fig. 15: eine Ausbildung für den Steuerwinkelabgriff über den Fahrzeuglängswinkel;
- Fig. 16: eine Ausbildung für den Steuerwinkelabgriff über den Kupplungswinkel;
- Fig. 17: eine weitere Ausbildung für den Steuerwinkelabgriff über den Kupplungswinkel;
- Fig. 18: eine Ausbildung zur Steuerwinkelübertragung über Zugelemente;
- Fig. 19: eine Ausbildung zur Steuerwinkelübertragung über Torsionselemente;
- Fig. 20: eine Ausbildung zur Steuerwinkelübertragung über Zug-Druckelemente;
- Fig. 21: eine Ausbildung zur Fahrwerkswendung mittels Hebel-Lenker-Einrichtung;
- Fig. 22: eine weitere Ausbildung zur Fahrwerkswendung mittels Hebel-Lenker-Einrichtung;
- Fig. 23: eine Ausbildung zur Fahrwerkswendung mittels Dreieckshebel;
- Fig. 24: eine Ausbildung zur Fahrwerkswendung mit Lemniskatenlenkeranordnung;
- Fig. 25: eine weitere Ausbildung zur Fahrwerkswendung mit Lemniskatenlenkeranordnung;
- Fig. 26: eine Prinzipdarstellung eines Beispiels der Erfindung mit Ausbildung der Selbstlenkelastizität in Verbindung mit der Einrichtung zur Steuerwinkelübertragung (e2);
- Fig. 27: eine Prinzipdarstellung eines weiteren Beispiels der Erfindung mit Ausbildung der Selbstlenkelastizität in Verbindung mit der Einrichtung zum Steuerwinkelabgriff (e1);
- Fig. 28: eine Prizipdarstellung eines weiteren Beispiels der Erfindung mit Ausbildung der Selbstlenkelastizität in Verbindung mit der Fahrwerkswendeeinrichtung (e3).
Die Kombination von weitgehend starrer Steuerung und Selbstlenkung von Einzelradsatzfahrwerken kann sowohl für Gelenkzüge als auch für dauernd oder zeitweise gekuppelte Einzelfahrzeuge genutzt werden.

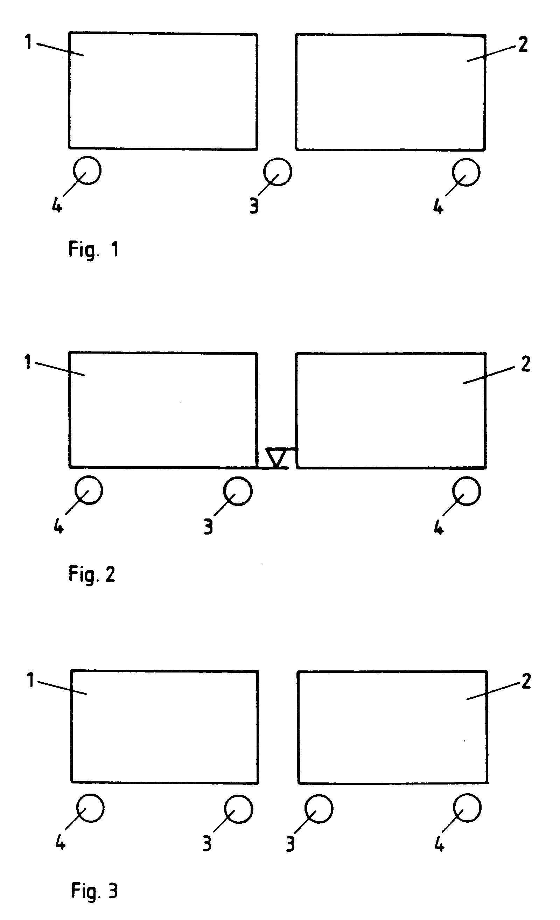

Der kleinste Fahrzeugverband mit zwei Fahrzeugen 1, 2 bzw. zwei Wagenkästen und drei Einzelfahrwerken 3, 4 nämlich einem mittleren Einzelfahrwerk 3 und zwei Endfahrwerken 4, ist in den Fig. 1 und 2 dargestellt. Die Wagenkästen der beiden Fahrzeuge 1, 2 stützen sich dabei an ihrem einen Ende auf je einem Endfahrwerk 4 ab. Die einander zugewandten Enden der Wagenkästen der Fahrzeuge 1, 2 stützen sich gemeinsam auf einem mittleren Einzelfahrwerk 3 ab, beispielsweise entweder in Jacobs-Anordnung oder über eine Aufsatteleinrichtung.

Ein Fahrzeugverband mit zwei Fahrzeugen 1, 2 bzw. zwei Wagenkästen und mit vier Einzelfahrwerken zeigt die Fig. 3. Bei dieser Ausbildung sind die Wagenkästen der beiden Fahrzeuge 1, 2 an ihrem einander zugewandten Ende auf je einem eigenen Einzelfahrwerk 3 abgestützt.

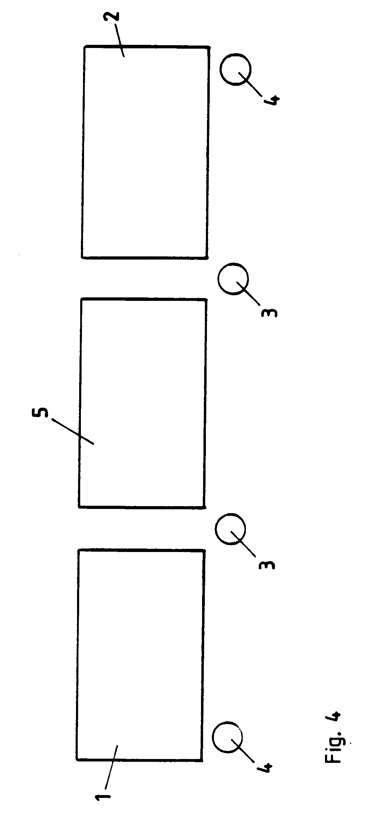

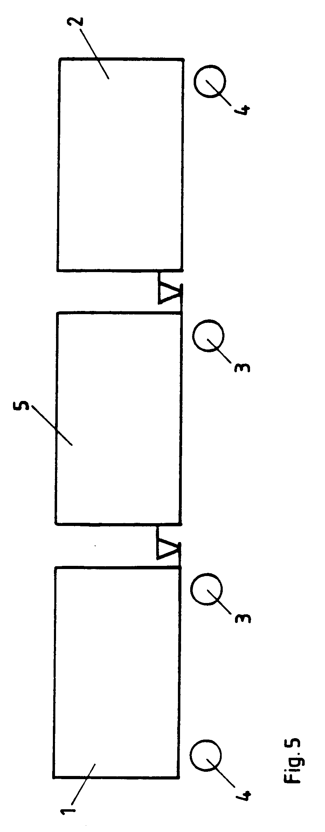

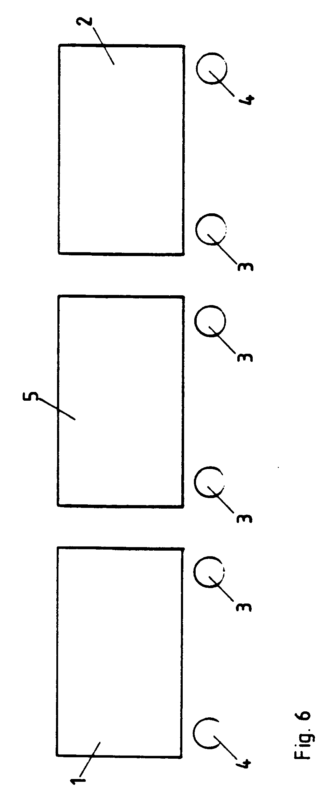

Durch Einfügen von Zwischenwagen 5 können beliebig lange Fahrzeugverbände gebildet werden. Die Anzahl und die Funktion der Endfahrwerke 4 ändern sich dabei nicht. Die Anzahl der mittleren Fahrwerke 3 vergrößert sich je nach Art des Fahrzeugverbandes je zusätzlichem Zwischenwagen 5 um jeweils ein mittleres Fahrwerk 3 (siehe Fig. 4 als Fortsetzung der Fahrzeugkette gemäß Fig. 1 und Fig. 5 als Fortsetzung der Fahrzeugkette gemäß Fig. 2) oder um jeweils zwei mittlere Fahrwerke 3 (siehe Fig. 6 als Fortsetzung der Fahrzeugkette gemäß Fig. 3).

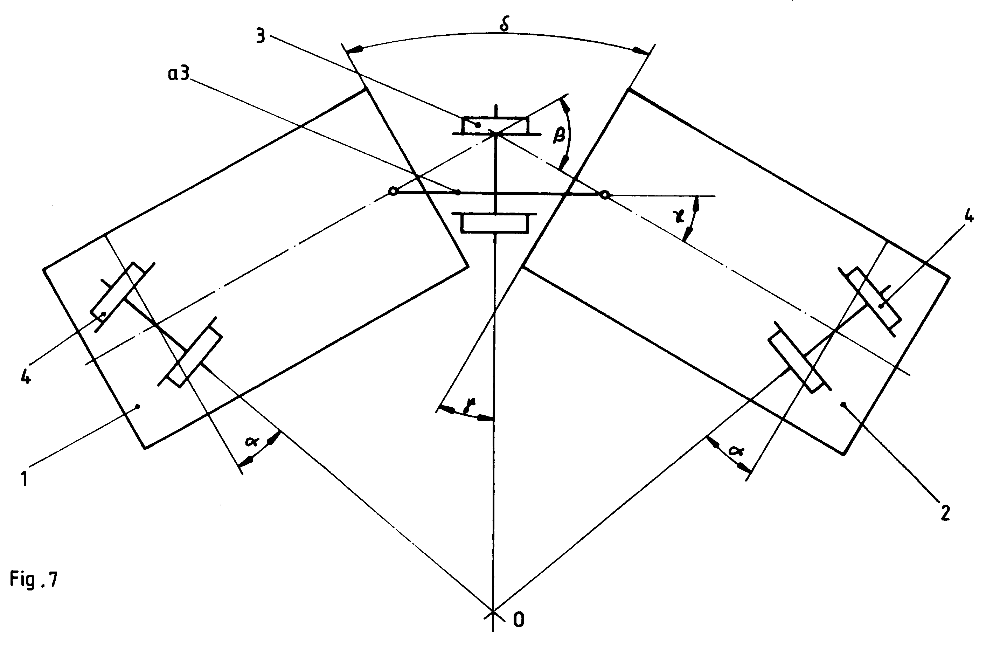

Allen Fahrzeugverbänden ist gemeinsam, daß sowohl die Endfahrwerke 4 als auch die mittleren Fahrwerke 3 in Gleisbögen durch die Steuerung eingestellt, d. h. erfindungsgemäß um ihre Hochachse gewendet werden sollen (Fig. 7).

Zunächst einige Winkeldefinitionen zur Darstellung in Fig. 7:
- α -: Wendewinkel des Endfahrwerks 4 (Außenfahrwerk);
- γ -: Wendewinkel des mittleren Fahrwerks 3 (Innenfahrwerk);
- β -: Knickwinkel des Fahrzeugverbandes bezüglich der Fahrzeuglängsachse;
- δ -: Steuerwinkel (bezüglich der Stirnwände der Wagenkäste der Fahrzeuge 1, 2);
- κ -: Kupplungssteuerwinkel (relativer Einschlag der Kuppelstange zur Fahrzeuglängsachse zweier über eine Kuppelstange gelenkig verbundenen Fahrzeug.

Im in Fig. 7 dargestellten Beispiel sind zwei Wagenkästen von Fahrzeugen 1, 2 mit je einem Endfahrwerk 4 und an den zugewandten Enden über ein gemeinsames mittleres Fahrwerk abgestützt. Die Wagenkästen der Fahrzeuge 1, 2 sind über eine Kuppelstange miteinander gelenkig verbunden.

Fahrwerke 3, 4 rollen nahezu ideal, wenn die Radachsen auf den Gleiskrümmungsmittelpunkt 0 weisen. Dies bedingt, daß die Achsen der Radsätze der Endfahrwerke 4 relativ zur Fahrzeugquerachse um den Winkel α (Wendewinkel α) geschwenkt werden müssen. Der in der Nähe der Verbindungsstelle von zwei Fahrzeugen 1, 2 angeordnete Radsatz des mittleren Fahrwerks 3 muß um den Winkel γ (Wendewinkel γ) gegen die Fahrzeugquerachse geschwenkt werden. Die Fahrzeuglängsachsen zweier benachbarter Fahrzeuge 1, 2 schneiden sich im Gleisbogen unter dem Winkel β (Knickwinkel β).

Ein entsprechender Winkel δ ist auch zwischen den Stirnwänden benachbarter Fahrzeuge 1, 2 zu finden. Die Stirnwände verlaufen nicht mehr parallel wie im geraden Gleis. Die Gleisbogenfahrt ist auch am relativen Einschlag der Kuppelstange a3 zur Fahrzeuglängsachse um den Winkel κ zu erkennen.

Die Winkel β, δ oder κ können als Steuerwinkel genutzt werden, um die gewünschten Fahrwerkswinkel α oder γ zu erzeugen.

Um ein Einzelradsatzfahrwerk innerhalb eines Fahrzeugverbands mit einer Steuerung (Zwangssteuerung) und einer Selbstlenkung zu versehen, sind folgende Elementarfunktion konstruktiv auszubilden:
- Ausbildung der Fahrzeugverbindung (Fahrzeugverbindung a);
- Abgriff des Steuerwinkels (Steuerwinkelabgriff b);
- Übertragung der Steuergröße (Steuergrößenübertragung c);
- Wendung des zu steuernden Fahrwerks (Fahrwerkswendung d);
- Überlagerung der zur Selbstlenkung erforderlichen Elastizität (Selbstlenkelastizität e).

Für jede dieser Elementarfunktionen gibt es mehrere konstruktive Lösungen. Beispielhaft werden mechanisch wirkende Lösungen im folgenden dargestellt. Hydraulisch oder elektrisch arbeitende Lösungen sind daraus unschwer ableitbar.

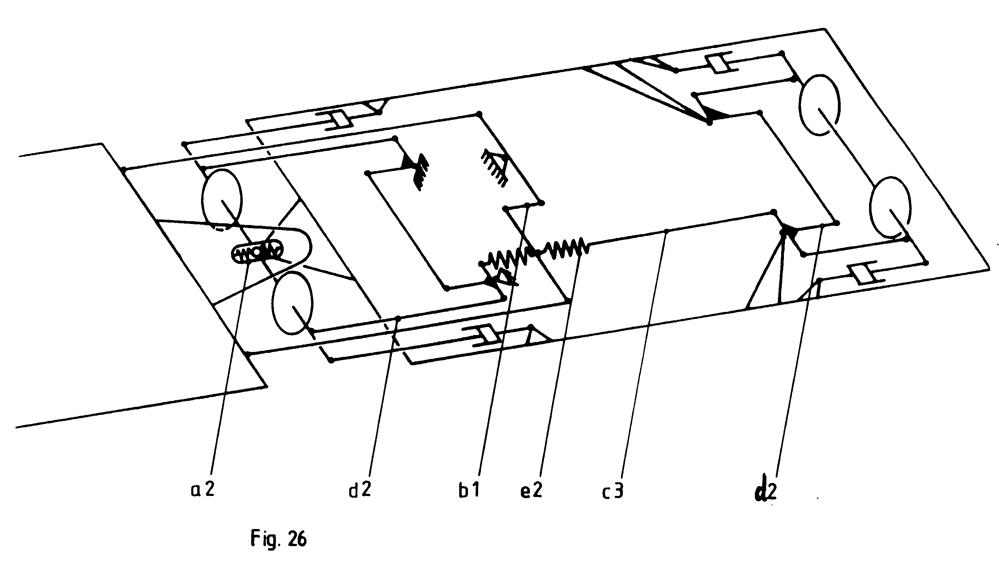

Prinzipiell ist jede der im folgenden beschriebenen Lösungen für eine einzelne Elementarfunktion mit jeder Lösung aller anderen Elementarfunktionen kombinierbar. Besonders geeignete Lösungskombinationen sind beispielhaft in den Fig. 26, 27 und 28 angegeben und später nachfolgend beschrieben.

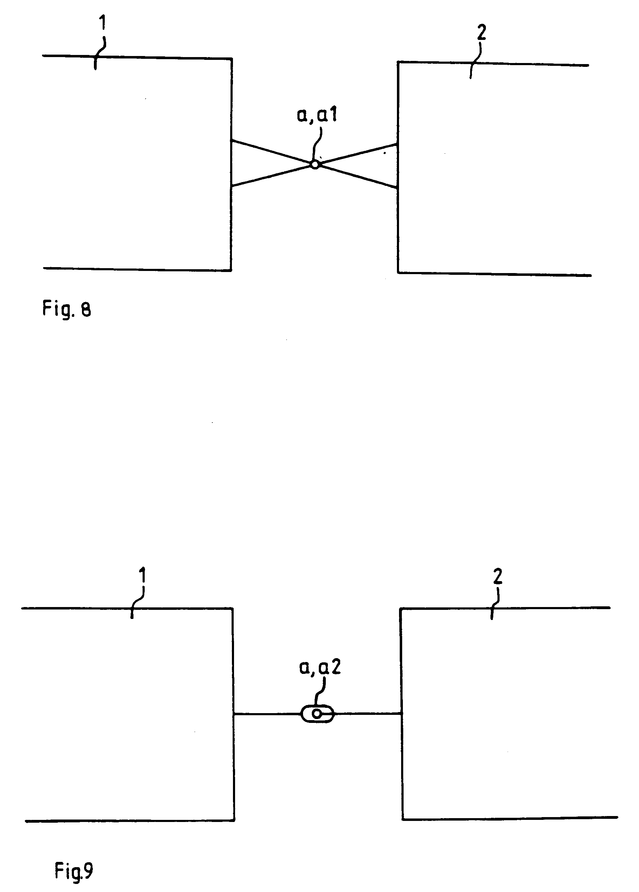

Die Fahrzeugverbindung a zwischen benachbarten Fahrzeugen wird üblicherweise durch Gelenke a1, Aufsatteleinrichtungen a2 oder Kuppelstangen a3 erzeugt. Fig. 8 zeigt zwei Fahrzeuge 1, 2 mit einer Gelenkverbindung a1.

Fig. 9 zeigt zwei Fahrzeuge 1, 2 mit einer Aufsatteleinrichtung a2, wobei eines der beiden Fahrzeuge 2 auf das andere Fahrzeug 1 aufgesattelt ist.

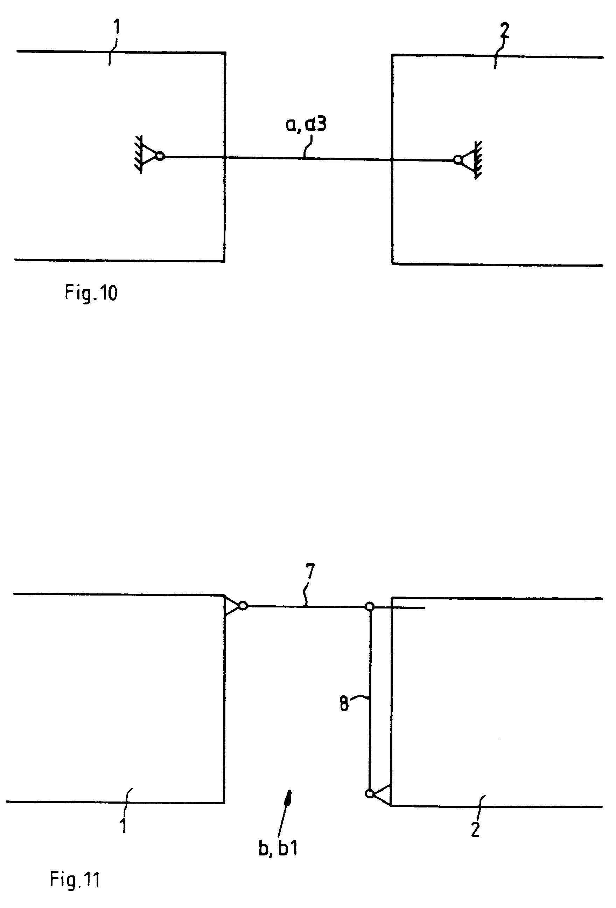

Fig. 10 zeigt zwei Fahrzeuge 1, 2, die durch eine Kuppelstange a3 verbunden sind.

Alle Fahrzeugverbindungen a können in Fahrzeuglängsrichtung starr oder elastisch ausgebildet sein.

Konstruktive Ausbildungen, die zum Steuerwinkelabgriff b geeignet sind, zeigen Fig. 11 bis Fig. 17.

Die Gruppe b1 der Ausbildungen, die zum Abgriff des Stirnwandwinkels δ geeignet ist, sind in Fig. 11 bis Fig. 14 dargestellt.

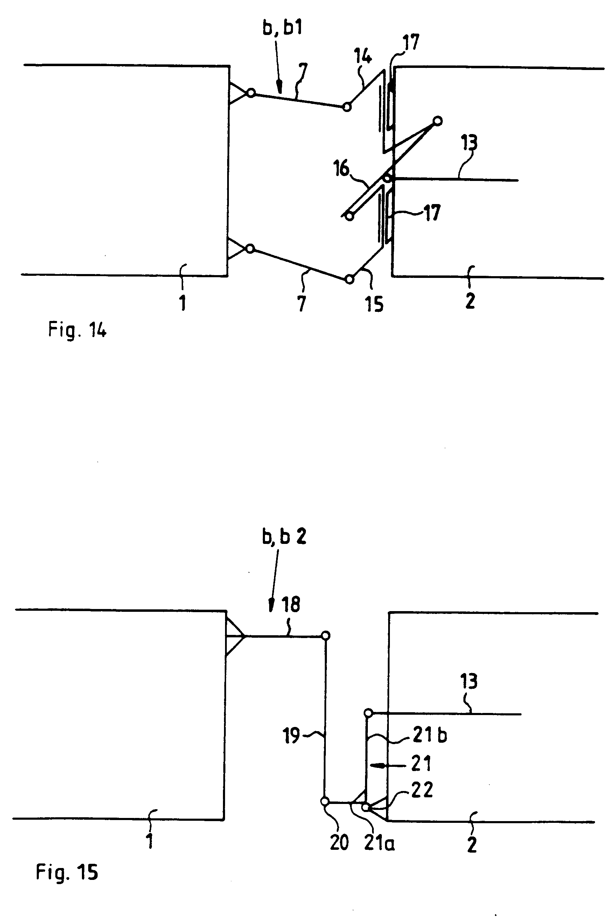

Eine Ausbildung b2, die zum Abgriff des Fahrzeuglängswinkels β geeignet ist, zeigt Fig. 15.

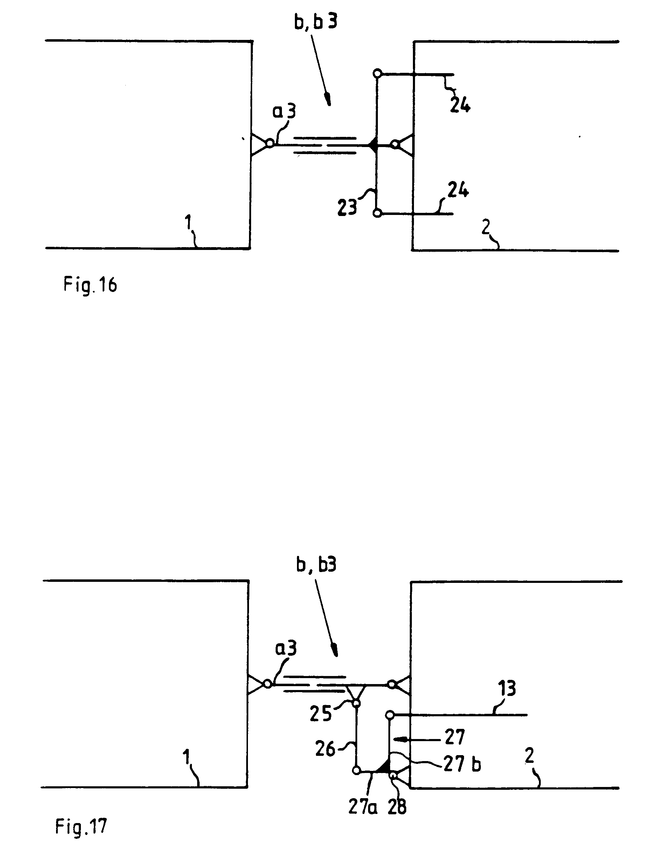

Die Gruppe der Ausbildungen b3, die zum Abgriff des Kupplungswinkels κ geeignet sind, zeigt Fig. 16 und Fig. 17.

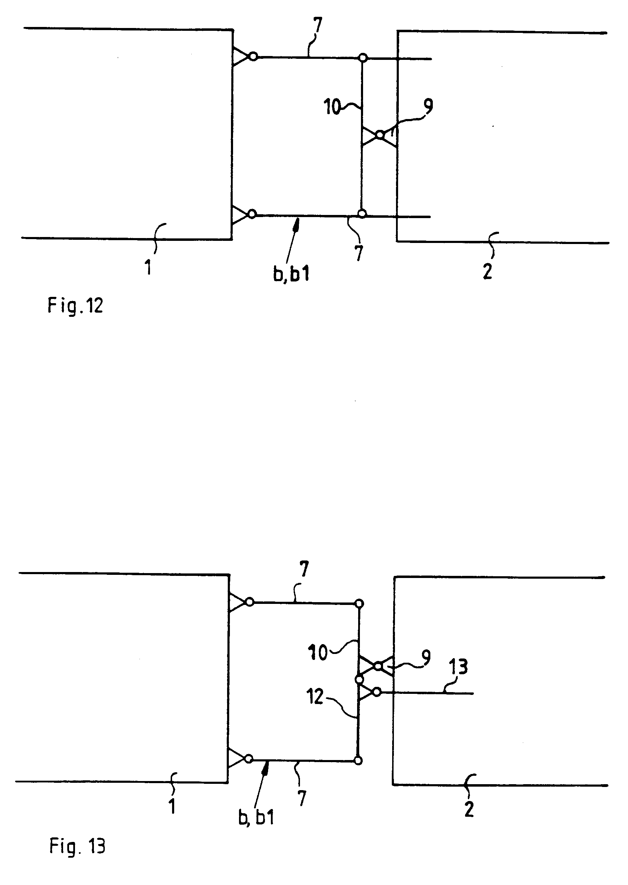

Die Gruppe der Ausbildungen b1, die zum Abgriff des Stirnwandwinkels δ nur für starr in Längsrichtung miteinander gekuppelte Fahrzeuge 1, 2 geeignet ist, zeigt Fig. 11 und Fig. 12, während die Ausbildungen b1 gemäß Fig. 13 und Fig. 14 auch für längselastisch ausgebildete Fahrzeugverbindungen geeignet sind.

Fig. 11 zeigt zwei in Längsrichtung starr gekuppelte Fahrzeuge 1 und 2. Parallel neben den Fahrzeuglängsachsen ist eine Steuerstange 7 angeordnet, die an einem Fahrzeug 1 gelenkig und an dem anderen Fahrzeug 2 längsverschieblich gelagert ist, z. B. über einen Lenker 8.

Fig. 12 zeigt zwei in Längsrichtung starr gekuppelte Fahrzeuge 1 und 2. Die Steuerstangen 7 sind am Fahrzeug 1 gelenkig außerhalb der Fahrzeuglängsachse angeordnet. Am Fahrzeug 2 ist in einem Lager 9 ein Hebel 10 gelagert, der an seinen Enden mit den Steuerstangen 7 gelenkig verbunden ist. Diese Anordnung für den Steuerwinkelabgriff b kann gleichzeitig zur Fahrzeugverbindung a genutzt werden.

Fig. 13 zeigt zwei in Längsrichtung starr oder elastisch miteinander verbundene Fahrzeuge 1 und 2. Zwei außermittig, parallel angeordnete Steuerstangen 7 sind am Fahrzeug 1 gelenkig angeschlossen und wirken auf ein Hebelgestänge, das Fehlsteuerwinkel durch Längsbewegungen der Fahrzeuge zueinander eliminieren kann. Ein Hebel 11 ist mit dem Fahrzeug 2 über ein Lager 9 gelenkig verbunden. Ein weiterer Hebel 12 ist am Hebel 11 und an der zugeordneten Steuerstange 7 befestigt. Die jeweils außenliegenden und die innenliegenden Hebelschenkel sind gleich lang. Am Hebel 12 ist eine Steuerstange 13 zur Steuergrößenübertragung c angelenkt.

Fig. 14 zeigt zwei in Längsrichtung starr oder elastisch verbundene Fahrzeuge 1 und 2. Die außermittig, parallel angeordneten Steuerstangen 7 wirken auf ein Ausgleichsgestänge, das aus zwei Kurbelwellen 14 und 15 besteht, deren zueinandergekehrten Kurbelenden durch einen Hebel 16 verbunden sind. Die Kurbelwellen 14 und 15 sind am Fahrzeug 2 in je einem Lager 17 gelagert. Die jeweils äußeren und inneren Kurbelarme sind gleich lang. Am Hebel 16 ist eine Steuerstange 13 zur Steuergrößenübertragung c angelenkt.

Eine Aubildung b2, die für den Abgriff des Steuerwinkels über den Fahrzeuglängswinkel β geeignet ist, zeigt Fig. 15. Die Fahrzeuge 1 und 2 sind in Längsrichtung starr oder elastisch miteinander verbunden. Am Fahrzeug 1 ist außermittig ein Ausleger 18 starr angeordnet. Am anderen Ende ist ein Lenker 19 angelenkt, der sich zur anderen Seite des Fahrzeugs 1 senkrecht über die Längsmittelebene hinaus erstreckt und über ein Gelenk 20 mit einem Winkelhebel 21 verbunden ist. Der erste Hebelarm 21a des Winkelhebels 21 ist parallel zur Fahrzeuglängsachse, der zweite Hebelarm 21b ist senkrecht dazu angeordnet (β = 0 Grad) und erstreckt sich in Richtung auf die senkrechte Längsmittelebene. Der Winkelhebel 21 stützt sich in seinem Knie in einem Lager 22 am Fahrzeug 2 ab. Das Lager 22 ist außermittig auf der dem Ausleger 18 gegenüberliegenden Seite bezüglich der Fahrzeuglängsachse angeordnet. Am Ende des Hebelarms 21b ist eine Steuerstange 13 zur Steuergrößenübertragung c angelenkt.

Somit überträgt der starr mit dem Fahrzeug 1 verbundene Ausleger 18 über den Lenker 19 und den am Fahrzeug 2 gelagerten Winkelhebel 20 die Steuerbewegungen auf die Steuerstange 13.

Ausbildungen b3 für den Abgriff des Steuerwinkels über den Kupplungswinkel κ zeigen die Fig. 16 und 17.

In Fig. 16 sind die Fahrzeuge 1 und 2 durch die Kuppelstange a3 miteinander verbunden. An und senkrecht zu der Kuppelstange a3 ist ein Querhebel 23 starr befestigt. An beiden Enden des Querhebel 23 ist eine Steuerstange 24 bzw. 25 gelenkig befestigt. Der Querhebel 23 kann auch einseitig ausgeführt sein und lediglich eine Steuerstange 23 oder 25 zur Steuergrößenübertragung c aufweisen.

Fig. 17 zeigt zwei in Längsrichtung starr oder elastisch verbundene Fahrzeuge 1 und 2, die durch eine in der senkrechten Fahrzeuglängsmittelebene angeordnete Kuppelstange a3 verbunden sind.

An der Kuppelstange a3 ist auf der Seite eines der Fahrzeuge (Fahrzeug 2) ein Lager 25 angeordnet. An diesem Lager 25 ist quer zur Fahrzeuglängsachse zu einer Fahrzeugseite ein Lenker 26 angelenkt, der an einem Hebelarm 27a eines Winkelhebels 27 angelenkt ist, der in seinem Knie gelenkig über ein Lager 28 am Fahrzeug 2 abgestützt ist. Der zweite Hebelarm 27b des Winkelhebels 27, dessen Hebelarm 27a und 27b zweckmäßig in einem Winkel von 90 °, angeordnet sind, erstreckt sich vom Lager 28 in Richtung auf die Fahrzeuglängsachse. Am Ende des Hebelarms 27b ist eine Steuerstange 13 zur Steuergrößenübertragung c angelenkt.

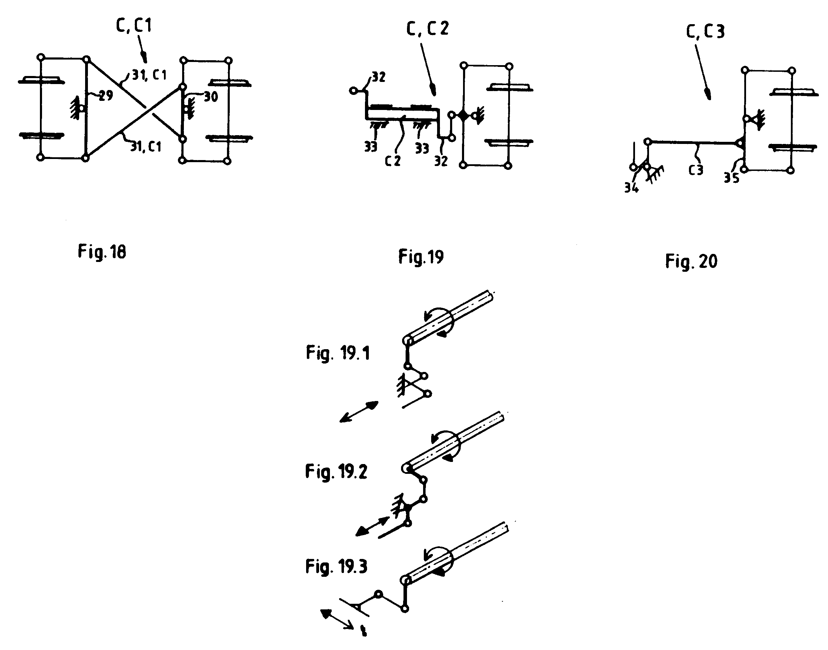

Mechanische Ausbildungen für die Steuergrößenübertragung c sind in den Fig. 18, 19 und 20 dargestellt und nachfolgend näher beschrieben. Es können auch entsprechend gleichwertige, nicht dargestellte, hydraulisch oder elektrisch wirkende Übertragungseinrichtungen verwendet werden.

Fig. 18 zeigt eine Übertragungseinrichtung c mit Zugelementen c1. Zwei am Fahrzeug gelagerte Hebel 29 und 30 sind durch Zugelemente 31, z. B. in Kreuzankeranordnung, verbunden.

Fig. 19 mit den Fig. 19.1, 19.2 und 19.3 zeigt eine Übertragungseinrichtung mit einem Torsionselement c2. Das Torsionselement c2 weist endseitige Kurbeln 32, 33 auf und ist am Fahrzeug 2 über ein Lager 33 abgestützt. Eine Kurbel 32 ist mit der Einrichtung zum Steuerwinkelabgriff b verbunden, die am anderen Ende des Torsionselementes c2 angeordnete Kurbel 32 ist mit der Einrichtung zur Fahrwerkswendung d verbunden. In den Fig. 19.1, 19.2 und 19.3 ist dargestellt, wie eine Längs- und Querbewegung über die Kurbel 32 in eine Drehbewegung auf das Torsionselement c2 übertragen wird.

Fig. 20 zeigt eine Übertragungseinrichtung mit Zug-Druckelement c3. Das Zug-Druckelement c3 übernimmt die Steuerbewegung von der Einrichtung zum Steuerwinkelabgriff b (hier ein Dreieckshebel 34) und überträgt sie auf die Einrichtung zur Fahrwerkswendung d (hier Hebel 35).

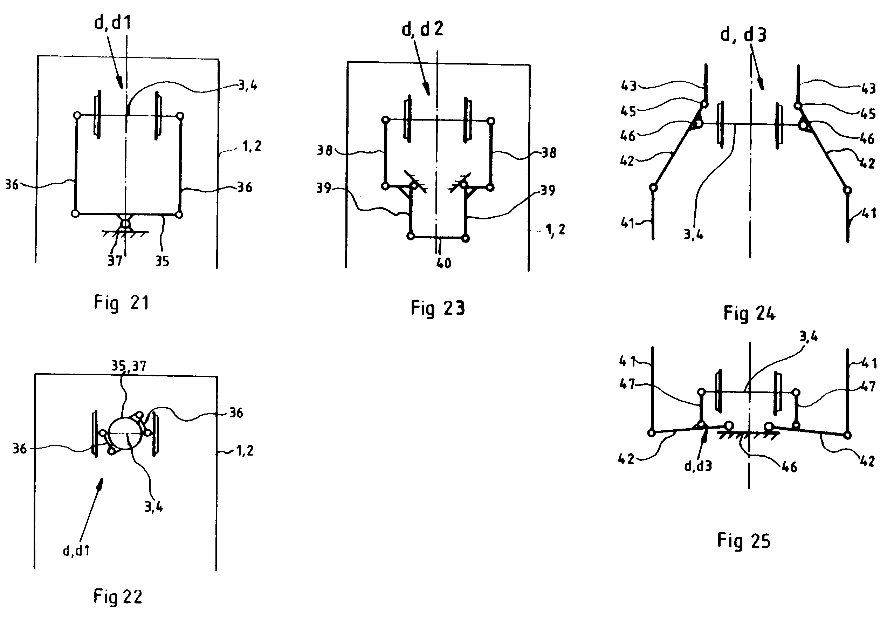

Ausbildungen für Einrichtungen zur Fahrwerkswendung d zeigen die Fig. 21 bis 24 und sind im folgenden näher beschrieben.

Eine Hebel-Lenker-Einrichtung d1 zeigt Fig. 21. Der Hebel 35 ist am Fahrzeug 1, 2 über ein Lager 37 mittig gelagert. An den Enden des Hebels 35 sind Lenker 36 angelenkt, deren andere Enden je an einer Seite des Fahrwerks 3, 4 angelenkt sind.

Eine Hebel-Lenker-Einrichtung d1 zeigt auch Fig. 22. Hier ist das Lager 37 am Wagenkasten des Fahrzeugs 1, 2 als Drehkranz ausgebildet.

In Fig. 23 ist eine Fahrwerkswendeeinrichtung d2 dargestellt, die in zur Längsmittelebene spiegelsymmetrischer Anordnung Lenker 38, Winkelhebel (Dreieckshebel 39) und eine Verbindungsstange 40 aufweist. Am Fahrzeug 1, 2 sind zwei Dreieckshebel 39 gelagert, die einerseits über die Verbindungsstange 40 untereinander und über die Lenker 38 (Längslenker) mit dem Fahrwerk 3, 4 verbunden sind.

Fig. 24 zeigt eine Fahrwerkswendeeinrichtung d3 in sogenannter Lemniskatenlenkeranordnung, bei der Längslenker für die Ausbildung der Funktion Steuerwinkelabgriff b (z. B. Längslenker 43) und der Funktion Steuerwinkelübertragung c (Längslenker 41) geeignet sind. Am zum Fahrwerk weisenden Ende eines Hebels 42 ist mittels Gelenk 44 ein Längslenker 41 angelenkt. Am anderen Ende des Hebels 42 ist mittels Gelenk 45 ein weiterer Längslenker 43 angelenkt, der seinerseits mit dem Fahrzeug 1, 2 verbunden ist. Zwischen den Gelenken 44, 45 ist ein Lager 46 zur Anlenkung des Fahrwerks 3, 4 vorgesehen. Die Längslenker 41, 43 und der Hebel 42 sind paarweise, spiegelsymmetrisch zur senkrechten Mittellängsebene angeordnet.

Bei Anordnung des Fahrwerks als Endfahrwerk 4 eines Zugverbandes sind die Längslenker 41 gleichzeitig Teil der Übertragungseinrichtung c.

Bei Anordnung des Fahrwerks als mittleres Fahrwerk 3 innerhalb eines Zugverbandes sind die Längslenker 41 mit einem Fahrzeug (Fahrzeug 1), die Lenker 43 mit dem benachbarten Fahrzeug (Fahrzeug 2) verbindbar (Steuerwinkelabgriff b).

Fig. 25 zeigt eine gleichartige Fahrzeugwendeeinrichtung d3, bei der jedoch der ebenfalls zur senkrechten Mittellängsebene spiegelsymmterisch, paarweise angeordnete Hebel 42 der Lemniskatenlenkeranordnung an dem Fahrzeug 1, 2 in einem Lager 46 gelagert ist. Die Längslenker 41 übertragen die Steuerbewegung auf die am Fahrzeug 1, 2 gelagerten Hebel 42, die über Lenker 47 das Fahrwerk 3, 4 steuern.

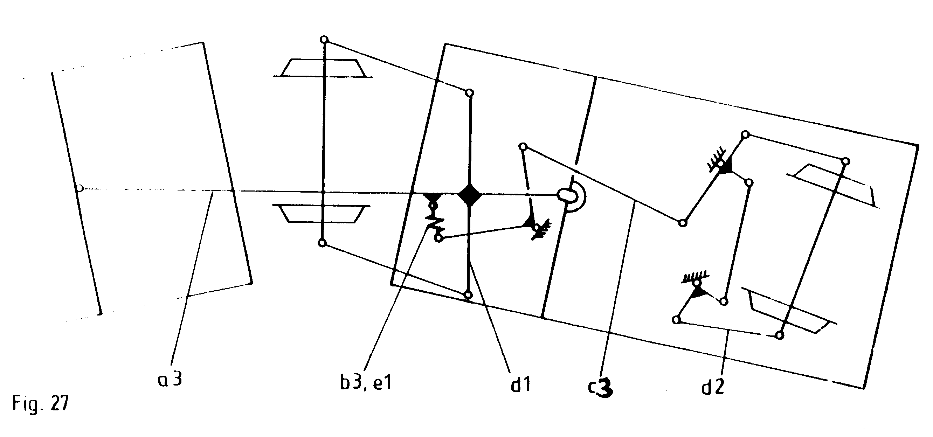

Die fünfte Elementarfunktion, die Selbstlenkelastizität e zur Selbstlenkung ist durch Ausbildung einer Elastizität innerhalb der Elementarfunktion Steuerwinkelabgriff b als elastischer Steuerwinkelabgriff e1 darstellbar (siehe Element e1 in Fig. 27) oder durch Ausbildung einer Elastizität innerhalb der Elementarfunktion Steuerwinkelübertragung c als elastische Steuergrößenübertragung e2 (siehe Element e2 in Fig. 26).

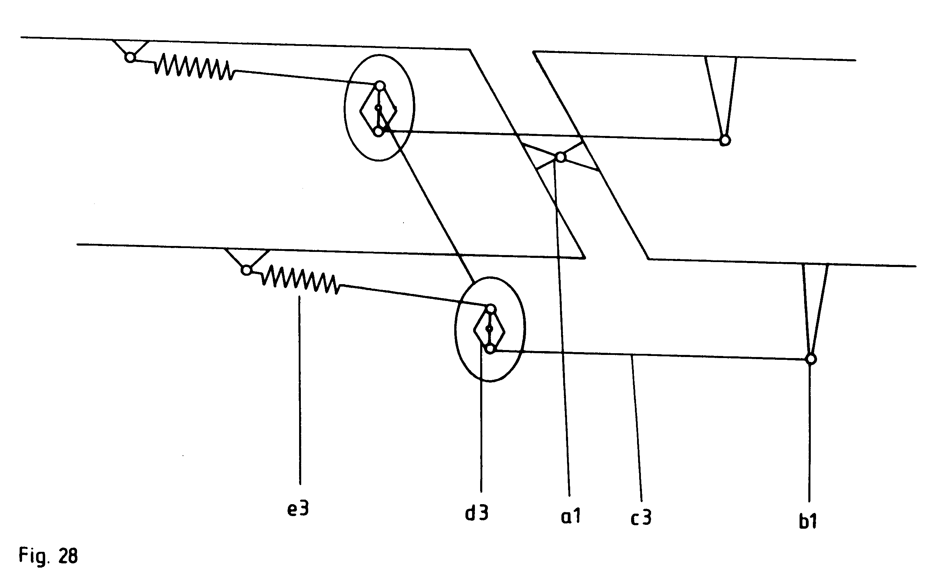

Auch ist es möglich, die erforderliche Selbstlenkelastizität e durch Ausbildung einer Elastizität innerhalb der Elementarfunktion Fahrwerkswendung d vorzusehen (siehe Element e3 in Fig. 28).

Weiter ist es möglich die erforderliche Selbstlenkelastizität durch Ausbildung einer Elastizität innerhalb der Radsatzlagerung im Fahrwerk 3, 4 vorzusehen (Radsatzlagerelastizität e4).

Jeder der Einrichtungen zum Selbstlenken der Fahrwerke (Selbstlenkelastizität e) besteht aus folgenden Teilelementen:

Radsatz mit linear oder vorzugsweise verschleißangepaßten, konischen Laufflächen und feder- oder/und schwerkraftabhängig wirkende Rückstelleinrichtungen, z. B. Schaken oder Pendel.

Diese Selbstlenkelastizität oder Nachgiebigkeit kann, wie schon weiter oben ausgeführt, in den eingangs beschriebenen Einrichtungen zum Steuerwinkelabgriff e1 und/oder zur Steuerwinkelübertragung e2 und/oder zur Fahrwerkswendung e3 und/oder zur Radsatzlagerung e4 angeordnet sein.

Vorzugsweise wird die Selbstlenkelastizität in der Ausbildung e1 und/oder e2 angewendet, da in diesen Ausbildungen die Antriebs- und Bremskräfte die Selbstlenkung nicht beeinträchtigen. Die Elastizität kann z. B. durch Federelemente und/oder gummielastische Gelenkverbindungen und/oder gummielastische Radsatzführungen und/oder Schaken-/Pendelaufhängungen oder bei hydraulisch wirkenden Einrichtungen durch Gasfedern verwirklicht werden. Parallel zu den Elastizitäten können erforderlichenfalls Dämpfungseinrichtungen angeordnet sein.

Fahrzeugverbände mit Ausbildungen bzw. konstruktiven Lösungen für die Elementarfunktionen Fahrzeugverbindung a, Steuerwinkelabgriff b, Steuergrößenübertragung c, Fahrwerkswendung d und Selbstlenkelastizität e lassen sich so aus der nachfolgend ausgeführten Ausbildungsmatrix (Lösungsmatrix) zusammenstellen.

| **Elementarfunktion** | **Ausbildungsmatrix** | | | | | |
|---|---|---|---|---|---|---|
| Fahrzeugverbindung a | a1 | a2 | a3 | ... | ... | aₙ |
| Steuerwinkelabgriff b | b1 | b2 | b3 | ... | ... | bₙ |
| Steuergrößenübertragung c | c1 | c2 | c3 | ... | ... | cₙ |
| Fahrwerkswendung d | d1 | d2 | d3 | ... | ... | dₙ |
| Selbstlenkelastizität e | e1 | e2 | e3 | e4 | ... | eₙ |

Das Beispiel gem. Fig. 26 ist durch Kombination der vorstehend beschriebenen Elemente a2, b1, c3, d2 und e2 der Lösungsmatrix gebildet.

Das Beispiel gem. Fig. 27 ist durch Kombination der vorstehend beschriebenen Elemente a3, b3, c1, d1 und e3 der Lösungsmatrix gebildet.

Das Beispiel gem. Fig. 28 ist durch Kombination der vorstehend beschriebenen Elemente a1, b1, c3, d3 und e3 der Lösungsmatrix gebildet.

Weitere Beispiele sind aus der vorstehend aufgeführten Lösungsmatrix zusammenstellbar.

### Bezugsziffern

- 1: Fahrzeug (Wagenkasten)
- 2: Fahrzeug (Wagenkasten)
- 3: mittleres Fahrwerk
- 4: Endfahrwerk
- 5: Zwischenwagen
- 7: Steuerstange
- 8: Lenker
- 9: Lager
- 10: Hebel
- 11: Hebel
- 12: Hebel
- 13: Steuerstange
- 14: Kurbelwelle
- 15: Kurbelwelle
- 16: Hebel
- 17: Lager
- 18: Ausleger
- 19: Lenker
- 20: Gelenk
- 21: Winkelhebel
- 21a: Hebelarm
- 21b: Hebelarm
- 22: Lager
- 23: Querhebel
- 24: Übertragungselement
- 25: Lager
- 26: Lenker
- 27a: Hebelarm
- 27b: Hebelarm
- 28: Lager
- 29: Hebel
- 30: Hebel
- 31: Zugelement
- 32: Kurbel
- 33: Lager
- 34: Dreieckshebel
- 35: Hebel
- 36: Lenker
- 37: Lager
- 38: Lenker
- 39: Dreieckshebel
- 40: Verbindungsstange
- 41: Längslenker
- 42: Hebel
- 43: Längslenker
- 44: Gelenk
- 45: Gelenk
- 46: Lager
- 47: Lenker
- a: Fahrzeugverbindung
- a1: Fahrzeugverbindung über Gelenk
- a2: Fahrzeugverbindung über Aufsatteleinrichtung
- a3: Fahrzeugverbindung über Kuppelstange
- b: Einrichtung zum Steuerwinkelabgriff
- b1: Einrichtung zum Steuerwinkelabgriff über Stirnwandwinkel
- b2: Einrichtung zum Steuerwinkelabgriff über Fahrzeuglängswinkel
- b3: Einrichtung zum Steuerwinkelabgriff über Kupplungswinkel
- c: Einrichtung zur Steuergrößenübertragung
- c1: Einrichtung zur Steuergrößenübertragung über Zugelement
- c2: Einrichtung zur Steuergrößenübertragung über Torsionselement
- c3: Einrichtung zur Steuergrößenübertragung über Zug-Druckelement
- d: Einrichtung zur Fahrwerkswendung
- d1: Einrichtung zur Fahrwerkswendung über Hebel-Lenker-Einrichtung
- d2: Einrichtung zur Fahrwerkswendung über Winkelhebel
- d3: Einrichtung zur Fahrwerkswendung über Lemniskatenlenkeranordnung
- e: Selbstlenkeinrichtung/Selbstlenkelastizität
- e1: Selbstlenkelastizität innerhalb der Einrichtung zum Steuerwinkelabgriff
- e2: Selbstlenkelastizität innerhalb der Einrichtung zur Steuergrößenübertragung
- e3: Selbstlenkelastizität innerhalb der Einrichtung zur Fahrwerkswendung
- e4: Selbstlenkelastizität innerhalb der Radsatzlagerung

## Patentansprüche

1. Aus mindestens zwei Fahrzeugen bestehender spurgeführter Fahrzeugverband mit mindestens drei gesteuerten Einzelradsatzfahrwerken (3, 4) nebst Steuereinrichtung, wobei das Steuersignal für die Einzelradsatzfahrwerke (3, 4) aus der Winkelstellung zweier benachbarter Fahrzeuge des Fahrzeugverbandes zueinander erzeugt wird, mit einer Übertragungseinrichtung zur Steuergrößenübertragung und mit einer Fahrwerks- oder Radsatzanlenkung zur Positionierung und Wendung gegenüber dem Wagenkasten, **dadurch gekennzeichnet**, daß der im wesentlichen starren Steuereinrichtung eine Selbstlenkeinrichtung mit Selbstlenkelastizität (e) für das Einzelradsatzfahrwerk (3, 4) zugeschaltet ist, die eine Selbstlenkung des Einzelradsatzfahrwerks (3, 4) in Kombination mit der im wesentlichen starren Steuerung gestattet.

2. Aus mindestens zwei Fahrzeugen bestehender spurgeführter Fahrzeugverband nach Anspruch 1, **dadurch gekennzeichnet**, daß die Selbstlenkeinrichtung mit Selbstlenkelastizität (e) innerhalb der Einrichtung zum Steuerwinkelabgriff angeordnet ist (e1).

3. Aus mindestens zwei Fahrzeugen bestehender spurgeführter Fahrzeugverband nach Anspruch 1, **dadurch gekennzeichnet**, daß die Selbstlenkeinrichtung mit Selbstlenkelastizität (e) innerhalb der Einrichtung zur Steuerwinkelübertragung angeordnet ist (e2).

4. Aus mindestens zwei Fahrzeugen bestehender spurgeführter Fahrzeugverband nach Anspruch 1, **dadurch gekennzeichnet**, daß die Selbstlenkeinrichtung mit Selbstlenkelastizität (e) innerhalb der Einrichtung zur Fahrwerkswendung angeordnet ist (e3).

5. Aus mindestens zwei Fahrzeugen bestehender spurgeführter Fahrzeugverband nach Anspruch 1, **dadurch gekennzeichnet**, daß die Selbstlenkeinrichtung mit Selbstlenkelastizität (e) innerhalb der Radsatzlagerung angeordnet ist (e4).

6. Aus mindestens zwei Fahrzeugen bestehender spurgeführter Fahrzeugverband nach einem oder mehreren der vorhergehenden Ansprüche 1 bis 5, **dadurch gekennzeichnet**, daß die Selbstlenkelastizität (e) innerhalb der Einrichtung zum Steuerwinkelabgriff (e1) und/oder der Einrichtung zur Steuerwinkelübertragung (e2) und/oder der Einrichtung zur Fahrwerkswendung (e3) und/oder der Radsatzlagerung (e4) angeordnet ist.

## Claims

1. Rail-guided vehicle combination consisting of at least two vehicles with at least three controlled single wheelset trucks (3, 4) together with the control device, the control signal for the single wheelset trucks (3, 4) being produced from the angular position of two neighbouring vehicles of the vehicle combination relative to one another, with a transmission device for transmission of the control variables and with a truck articulation or wheelset articulation for positioning and turning relative to the body of the vehicle, characterised in that the essentially rigid control device is connected to a self-steering device with self-steering elasticity (e) for the single wheelset truck (3, 4) which allows self-steering of the single wheelset truck (3, 4) in combination with the essentially rigid control.

2. Rail-guided vehicle combination consisting of at least two vehicles according to claim 1, characterised in that the self-steering device with the self-steering elasticity (e) is disposed inside the device for measuring the control angle (e1).

3. Rail-guided vehicle combination consisting of at least two vehicles according to claim 1, characterised in that the self-steering device with the self-steering elasticity (e) is disposed inside the device for transmission of the control angle (e2).

4. Rail-guided vehicle combination consisting of at least two vehicles according to claim 1, characterised in that the self-steering device with the self-steering elasticity (e) is disposed inside the device for turning the truck (e3).

5. Rail-guided vehicle combination consisting of at least two vehicles according to claim 1, characterised in that the self-steering device with the self-steering elasticity (e) is disposed inside the wheelset mounting (e4).

6. Rail-guided vehicle combination consisting of at least two vehicles according to one or more of the preceding claims 1 to 5, characterised in that the self-steering elasticity (e) is provided inside the device for measuring the control angle (e1) and/or the device for transmitting the control angle (e2) and/or the device for turning the truck (e3) and/or the wheelset mounting (e4).

## Revendications

1. Convoi de véhicules guidé formé d'au moins deux véhicules et comportant au moins trois châssis commandés à jeux de roues individuels (3, 4) avec un dispositif de commande, le signal de commande pour les châssis à jeux de roues individuels (3, 4) étant généré à partir de la position angulaire de deux véhicules voisins dans le convoi, un dispositif de transmission pour la transmission de grandeurs de commande, et une articulation de châssis ou de jeux de roues pour le positionnement et le virage par rapport à la caisse de la voiture, **caractérisé** en ce qu'il est prévu, raccordé au dispositif de commande sensiblement rigide, un dispositif d'autoguidage à élasticité d'autoguidage (e) pour le châssis à jeux de roues individuels (3, 4), qui permet un autoguidage dudit châssis (3, 4) en combinaison avec la commande sensiblement rigide.

2. Convoi de véhicules guidé formé d'au moins deux véhicules selon la revendication 1, **caractérisé** en ce que le dispositif d'autoguidage à élasticité d'autoguidage (e) est disposé (e1) à l'intérieur du dispositif de prélèvement d'angle de commande.

3. Convoi de véhicules guidé formé d'au moins deux véhicules selon la revendication 1, **caractérisé** en ce que le dispositif d'autoguidage à élasticité d'autoguidage (e) est disposé (e2) à l'intérieur de la transmission d'angle de commande.

4. Convoi de véhicules guidé formé d'au moins deux véhicules selon la revendication 1, **caractérisé** en ce que le dispositif d'autoguidage à élasticité d'autoguidage (e) est disposé (e3) à l'intérieur du dispositif pour le virage du châssis.

5. Convoi de véhicules guidé formé d'au moins deux véhicules selon la revendication 1, **caractérisé** en ce que le dispositif d'autoguidage à élasticité d'autoguidage (e) est disposé (e4) à l'intérieur du montage de jeux de roues.

6. Convoi de véhicules guidé formé d'au moins deux véhicules selon l'une au moins des revendications 1 à 5 précédentes, **caractérisé** en ce que l'élasticité d'autoguidage (e) est disposée à l'intérieur du dispositif pour le prélèvement d'angle de commande (e1) et/ou du dispositif pour la transmission d'angle de commande (e2) et/ou du dispositif pour le virage de châssis (e3) et/ou du montage de jeux de roues (e4).
